# EUROPÄISCHE PATENTSCHRIFT

(11) **EP 0 967 893 B1**
(45) Veröffentlichungstag und Bekanntmachung des Hinweises auf die Patenterteilung: **22.10.2003**
(21) Anmeldenummer: 98916808.3
(22) Anmeldetag: 24.02.1998
(51) Int. Cl.: A23L 3/3418, A23L 3/3445

(54) **VERFAHREN UND VORRICHTUNG ZUM HALTBARMACHEN VON KAPILLARPORÖSEN PRODUKTEN, INSBESONDERE VON BACKWAREN**
METHOD AND DEVICE FOR PRESERVING CAPILLARY POROUS PRODUCTS, ESPECIALLY BAKED PRODUCTS
PROCEDE ET DISPOSITIF POUR CONSERVER DES PRODUITS POREUX CAPILLAIRES, NOTAMMENT DES PRODUITS DE BOULANGERIE

(30) Priorität: 25.02.1997 DE 19708752
(43) Veröffentlichungstag der Anmeldung: 05.01.2000
(73) Patentinhaber: IGV - Institut für Getreideverarbeitung GmbH, 14558 Bergholz-Rehbrücke (DE); Elzer Backwaren GMBH Fabrikationsgesellschaft KG, 31008 Elze-Mehle (DE)
(72) Erfinder: JANK, Rüdiger, D-13158 Berlin (DE); ZEHLE, Günter, D-14558 Bergholz-Rehbrücke (DE); SPRENGEL, Friedrich, D-30890 Barsinghausen (DE)
(74) Vertreter: Bröseke, Eribert, Dipl.-Ing.
(86) Internationale Anmeldenummer: DE9800581
(87) Internationale Veröffentlichungsnummer: WO98037777

(56) Entgegenhaltungen:
- EP-A- 0 146 510
- WO-A-93/20700
- V. HERRMANN: "Tausendassa Kohlensäure" BROT & BACKWAREN, Bd. 29, Nr. 1/2, - 1981 Seiten 14-15, XP002075447
- ANONYMUS: "CO2-Anwendung beim Kühlen und Verpacken von Backwaren" VERPACKUNGS-RUNDSCHAU, Bd. 32, Nr. 1, - 1981 Seiten 30-32, XP002075448

## Beschreibung

Die Erfindung betrifft ein Verfahren und eine Vorrichtung zum Haltbarmachen von kapillarporösen Produkten, insbesondere von Backwaren nach dem Oberbegriff des Anspruchs 1.

Zum Haltbarmachen von Backwaren ist es bekannt, diesen eine ausreichende Menge Zucker, Zuckeralkohole, Salz u.a. lösliche Substanzen zuzugeben, um den Wasserdampfdruck im Produkt zu senken. Die Wasseraktivität im Gebäck sollte unter 0,8 liegen. Aus sensorischen Gründen ist dieses Verhältnis jedoch in vielen Fällen nicht einzuhalten. Es ist deshalb weiterhin bekannt, den Backwaren Konservierungsmittel zuzusetzen. Diese sind jedoch in letzter Zeit aus unterschiedlichen Gründen unerwünscht.

Es ist bekannt, daß die Poren und Kapillaren von Backwaren während des Backens und unmittelbar nach dem Backen vollständig mit Wasserdampf gefüllt sind. Dieser kondensiert während des Abkühlvorganges, wodurch in den Poren ein Unterdruck entsteht. Kühlen die Backwaren in der normalen Umgebung ab, wird keimbelastete Luft angesaugt. Dadurch wird die mikrobiologische Stabilität reduziert.

Zur Erhöhung der Haltbarkeitsdauer von Backwaren ist es bekannt, diese nach dem Abkühlen mit Kohlendioxid zu impfen. Dadurch soll die eingedrungene Luft aus den Backwaren ausgetrieben und ein oxidativer und mikrobiologischer Verderb verhindert werden. Die Backwaren werden anschließend in Folie verpackt, in die eine modifizierte Atmosphäre aus Kohlendioxid und/oder Stickstoff oder mit Alkohol versetzte Luft eingeblasen wird. Die Backwaren werden also in dieser modifizierten Atmosphäre gelagert, wodurch das erneute Eindringen von Luft in die Backwaren verhindert werden soll (DE-OS 29 06 272).

Dieses Verfahren führt aber nicht zwangsläufig zu einer ausreichenden Sauerstoffreduzierung. Als Ursache hierfür wurde erkannt, daß durch das Impfen mit einem Intergas, wie Kohlendioxid, die Luft nicht vollständig aus den Backwaren verdrängt wird. Die im Inneren der Backwaren verbliebene Luft mit dem darin enthaltenen Sauerstoff und den darin enthaltenen aeroben Keimen begrenzen die Haltbarkeit der Backwaren.

Die gleichen Probleme treten bei anderen kapillarporösen Produkten, wie z.B. pharmazeutischen oder medizinischen Schwämmen, auf.

WO 93/20700 beschreibt ein Verfahren zum Abpacken von Backwaren, wobei die Backwaren nach dem Backen unmittelbar in einem Kühltunnel unter Inertgasatmospäre gekühlt und anschließend abgepackt werden.

Der Erfindung liegt die Aufgabe zugrunde, die Haltbarkeitsdauer von inertgasbehandelten und unter Inertgas oder, wie in der Pharmazie üblich, unter Sterilluft abgepackten kapillarporösen Produkten, insbesondere von Backwaren, weiter zu erhöhen.

Erfindungsgemäß wird das gemäß den Merkmalen der Ansprüche 1 und 13 erreicht.

Bei einem Verfahren zum Haltbarmachen von kapillarporösen Produkten, insbesondere von Backwaren durch Behandlung mit mindestens einem Inertgas, werden erfindungsgemäß die zu behandelnden Produkte bei einer erhöhten für die Sterilisation ausreichenden Temperatur, bei der in den Kapillaren vorhandenes Wasser in Dampf form vorliegt, unmittelbar an die Wärmebehandlung in eine Inertgasatmosphäre gebracht. Anschließend werden die Produkte in dieser Inertgasatmosphäre abgekühlt und diese wird während des Abkühlvorganges so geführt, daß der Wasserdampf in den Produkten kondensiert und durch den entstehenden Unterdruck Inertgas adsorbiert wird, Feuchtigkeit aus den zu behandelnden Produkten aufgenommen werden kann und daß die Produkte nach der Abkühlung auf eine vorbestimmte Temperatur, bei der die Feuchtigkeit aus den Produkten ausreichend entfernt ist und die Poren und Kapillaren Inertgas adsorbiert haben, in der Inertgasatmospäre gasdicht verpackt werden.

Bei diesem Verfahren wird der beim Abkühlen entstehende Unterdruck in den zu behandelnden Produkten ausgenutzt, um Inertgas in diese einzusaugen. Der in den Produkten vorhandene Wasserdampf tritt dabei in das Inertgas ein. Auf diese Weise ist es möglich, eine Sauerstoffadsorption nahezu vollständig zu verhindern, so daß insbesondere auch im Inneren von Backwaren eine Fettoxidation vermieden wird.

Bei Backwaren werden diese unmittelbar nach Beendigung des Backvorganges der Inertgasatmosphäre ausgesetzt, sie werden in dieser Atmosphäre vorzugsweise auf eine Kerntemperatur unter 50° C abgekühlt und bei dieser Temperatur verpackt.

Der Abkühlvorgang erstreckt sich zweckmäßig über einen Zeitraum vom 5 bis 180 Minuten und vorzugsweise von 15 bis 20 Minuten.

Es ist zweckmäßig, daß die Inertgasatmosphäre gegenüber der Umgebung einen leicht Überdruck aufweist. Vorzugsweise sollte dieser mindestens 1,0 bis 1,5.10-³ Pa betragen.

Das Inertgas wird im Kreislauf geführt und dabei kontinuierlich entfeuchtet. Für den Ersatz des von den Produkten aufgenommenen Inertgases wird zusätzlich neues Inertgas zugeführt. Dadurch wird der Verbrauch an Inertgas für das Verfahren gegenüber der alleinigen Neueinspeisung trockenen Inertgas verringert. Es ist zweckmäßig, daß das für die Spülung das Verpackungsfolienschlauches vorgesehene Inertgas auch gleichzeitig als neueingespeistes Inertgas für die Behandlung der Produkte verwendet wird.

Als Inertgas wird zweckmäßig Kohlendioxid, Stickstoff, ein Gemisch aus Kohlendioxid und Stickstoff oder Sterigas verwendet.

Es ist weiterhin zweckmäßig, daß das Inertgas und die zu behandelnden Produkte mindestens teilweise im Gegenstrom geführt werden. Während also die zu behandelnden Produkte von einem Eingang zum einem Ausgang durch den Inertgasbehandlungsraum bewegt werden, wird das Inertgas im Bereich des Ausgangs zugeführt und im Bereich des Eingangs abgeführt.

Für die Erzielung der notwendigen Abkühlung der zu behandelnden Produkte kann zweckmäßig das Inertgas verwendet werden, indem das Inertgas nach dem Passieren der zu behandelnden Produkte gekühlt wird und im gekühlten Zustand erneut über die zu behandelnden Produkte geleitet wird.

Bei einer Vorrichtung zum Haltbarmachen von kapillarporösen Produkten, insbesondere von Backwaren, unter Verwendung mindestens einer Inertgasquelle, ist dem Raum zur Behandlung von kapillarporösen Produkten mittels Inertgas mindestens einer Vorrichtung zur Wärmebehandlung und mindestens eine Vorrichtung zum wärmeerhaltenden Transport der Produkte in den Inertgasbehandlungsraum zugeordnet. Weiterhin sind innerhalb des Inertgasbehandlungsraumes Transportmittel vorgesehen und am Ausgang des Inertgasbehandlungsraumes ist mindestens eine Verpackungsvorrichtung und zwischen den letztgenannten eine Transportvorrichtung vorgesehen, die in einem gasdichten Gehäuse geführt ist. Weiterhin ist dem Inertgasbehandlungsraum eine Vorrichtung zur Kühlung und Entfeuchtung des Inertgases zugeordnet. Die Vorrichtung zum wärmeerhaltenden Transport kann mindestens ein abgeschirmtes Transportband sein oder in dem Fall, daß die Vorrichtung zur Wärmebehandlung und der Inertgasbehandlungsraum unmittelbar nebeneinander liegen, kann auch ein ungeschirmtes Transportband vorgesehen sein, da die Temperatur wegen der kurzen Entfernung kaum absinkt.

Mit dieser Vorrichtung ist es möglich, die zu behandelnden Produkte mit der notwendigen Temperatur in großer Stückzahl in den Inertgasbehandlungsraum einzubringen und durch diesen hindurch in die Verpackungsvorrichtung zu transportieren. Die Vorrichtung zur Kühlung und Entfeuchtung des Inertgases gewährleistet, daß aus den zu behandelnden Produkten durch das im Kreislauf geführte Intertgas nicht nur das Wasser entfernt wird, sondern daß die Produkte auch abgekühlt werden.

In einer bevorzugten Ausführungsform weist das Gehäuse für die Transportvorrichtung zwischen dem Behandlungsraum und der Verpackungsvorrichtung einen Einlaß für das Inertgas auf und das Gehäuse ist mit dem Inertgasbehandlungsraum und der Verpackungsvorrichtung gasdicht verbunden. Das durch diesen Einlaß eingespeiste Inertgas ist sowohl für die Verpackung bestimmt, als auch neben dem im Kreislauf geführten Intergas für die Behandlung der Produkte im Inertgasbehandlungsraum bestimmt.

Es ist weiterhin zweckmäßig, daß am Eingang des Inertgasbehandlungsraumes eine Inertgasschleuse für die Überführung der zu behandelnden Produkte von der Vorrichtung zur Wärmebehandlung in den Inertgasbehandlungsraum vorgesehen ist.

In einer Ausführungsform ist im oberen Bereich des Inertgasbehandlungsraumes eine Absaugöffnung vorgesehen, an die sich ein Verdichter und eine Kälteanlage und/ oder Kühlung anschließt. Der Ausgang der Kälteanlage ist zum einen mit der Inertgaseingangsschleuse und zum anderen oberhalb des Ausgangsbereiches für die zu behandelnden Produkte des Inertgasbehandlungsraumes mit diesem verbunden. In einer weiteren Ausgestaltung dieser Ausführungsform ist vorgesehen, daß der Ausgang der Kälteanlage über mehrere übereinanderliegende Leitungen unter Einbeziehung von Ventilen mit unterschiedlichen Höhenbereichen des Inertgasbehandlungsraumes verbunden ist. Dadurch ist der Inertgaszulauf wählbar.

Eine weitere Ausgestaltung der Erfindung sieht vor, daß im Inertgasbehandlungsraum zwei Spiraltürme für den Transport der zu behandelnden kapillarporösen Produkte vorgesehen sind, wobei ein Spiralturm im Eingangsbereich für den Aufwärtstransport der Produkte und ein Spiralturm im Ausgangsbereich für den Abwärtstransport angeordnet sind. Die Überführung der Produkte von einem zum anderen Spiralturm erfolgt mittels eines Förderbandes.

Bei einer Vorrichtung zur Behandlung von Backwaren ist die Vorrichtung zur Wärmebehandlung ein Backofen.

Als Transportvorrichtungen zwischen der Vorrichtung zur Wärmebehandlung und dem Inertgasbehandlungsraum sowie zwischen diesem und der Verpackungsvorrichtung können Tansportbänder vorgesehen sein.

Die Erfindung soll in einem Ausführungsbeispiel anhand einer schematischen Zeichnung erläutert werden.

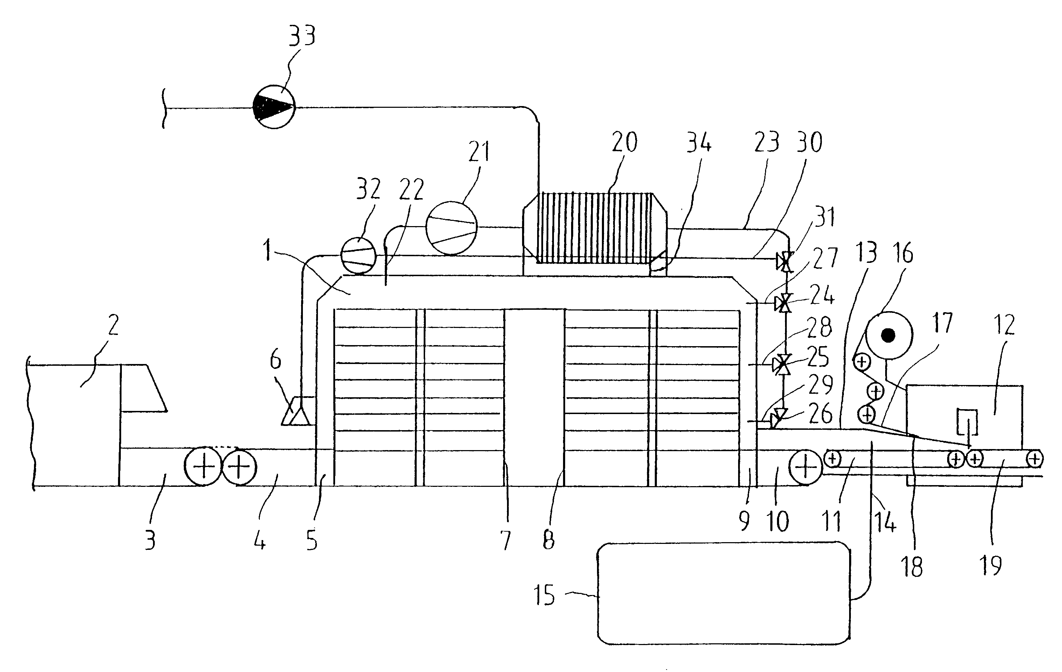

In der Zeichnung ist ein Inertgasbehandlungsraum 1 für Backwaren mit seinem Zubehör dargestellt. Dem Inertgasbehandlungsraum ist ein Backofen 2 vorangestellt. Anstelle des Backofens könnte auch ein Trockner zugeordnet sein, um bei anderen kapillarporösen Produkten als Backwaren die erforderliche Temperatur zu erzeugen, bei der Wasser in den Poren und Kapillaren in Dampfform vorliegt und das Produkt gleichzeitig sterilisiert wird. Der Backofen weist ein Transportband 3 auf, dem ein Transportband 4 am Eingang 5 des Inertgasbehandlungsraumes 1 zugeordnet ist. In diesem Bereich ist eine Inertgasschleuse 6 vorgesehen, die das Eindringen von Luft in den Inertgasbehandlungsraum 1 beim Einbringen der Backwaren in diesen verhindert.

Im Inertgasbehandlungsraum 1 sind zwei Spiraltürme 7, 8 für den Transport der Backwaren vom Eingang zum Ausgang vorgesehen. Im Spiralturm 7 werden die Backwaren nach oben gefördert, dann in den Spiralturm 8 überführt und dort nach unten zum Ausgang 9 transportiert. Zwischen beiden Spiraltürmen ist am oberen Ende ein Transportband vorhanden.

Am Ausgang 9 ist ein Transportband 10 vorgesehen, dem ein Transportband 11 einer Verpackungsmaschine 12 zugeordnet ist. Diese beiden Transportbänder sind von einem gasdichten Gehäuse 13 umgeben, das auch gasdicht an den Ausgang 9 und an die Verpackungsmaschine 12 angeschlossen ist. In das Gehäuse 12 mündet eine Leitung 14 eines Tanks 15 für ein Inertgasgemisch aus Kohlendioxid und Stickstoff. Diese Leitung versorgt sowohl die Verpackungsmaschine 12 als auch den Inertgasbehandlungsraum 1 mit dem Gasgemisch. Der Verpackungsmaschine sind weiterhin eine Folienrolle 16 mit Verpackungsfolie 17, eine Folienfaltvorrichtung 18, die im Gehäuse 13 integriert ist, sowie ein Transportband 19 für den Abtransport der verpackten Backwaren aus der Verpakkungsmaschine zugeordnet.

Dem Inertgasbehandlungsraum 1 ist eine Kompressionskälteanlage mit einem Kühler und Verdampfer 20 zugeordnet. Der Eingang der Kompressionskälteanlage ist mit einem Kreiselverdichter 21 zur Absaugung des Gas-Dampfgemisches aus dem Inertgasbehandlungsraum 1 über ein Absaugrohr 22 verbunden, das oberhalb des Inertgasbehandlungsraumes angebracht ist. Der Ausgang der Kompressionskälteanlage ist mit einer Leitung 23 für die Zuleitung des entfeuchteten und gekühlten Gases zum Inertgasbehandlungsraum 1 verbunden. An diese Leitung 23 sind unter Zwischenschaltung von Ventilen 24 bis 26 Leitungen 27 bis 29 angeschlossen, die oberhalb des Ausgangs 9 des Inertgasbehandlungsraumes 1 in diesen münden. Dadurch ist die Inertgaszufuhr wählbar. An die Leitung 23 ist weiterhin eine Leitung 30 über ein Ventil 31 mit einem Kreiselverdichter 32 für die Versorgung der Inertgasschleuse 6 mit trockenem Inertgas angeschlossen.

Im Inertgasbehandlungsraum 1 befindet sich also einerseits das im Kreislauf geführte Inertgas und zum Ersatz des durch die Backwaren adsorbierten und durch die Inertgasschleuse entweichenden Inertgases das durch die Leitung 14 neu zugeführte Inertgas.

Dem Kühler und Verdampfer 20 sind eine Pumpe 33 für Kühlwasser sowie ein Kühlwasserrücklauf 34 zugeordnet.

Die frisch gebackenen Backwaren werden über die Transportbänder 3, 4 und die Inertgasschleuse 6 zum Eingang 5 befördert. Um ein Abkühlen während des Transportes zum Eingang 5 des Inertgasbehandlungsraumes 1 zu verhindern, sind die Transportbänder entweder sehr kurz oder sie sind mit einer nicht dargestellten beheizbaren Abdeckung versehen.

Im Inertgasbehandlungsraum 1 werden die Backwaren zunächst im Spiralturm 7 nach oben transportiert. Dabei werden sie von dem vom Eingang 9 und von einer oder mehreren der Leitungen 27 bis 29 zugeführtem und am Absaugrohr 22 abgeführten Kohlendioxid/Stickstoffgemisch umspült. Da dieses Gemisch kälter ist als die Backwaren, werden diese dabei abgekühlt, wodurch der in den Backwaren befindliche Wasserdampf kondensiert und gleichzeitig Inertgas in den Kapillaren der Backwaren adsorbiert wird. Der Wasserdampf wird durch das im Kreislauf geführte Inertgasgemisch aufgenommen und über das Absaugrohr 22 und den Kreiselverdichter 21 der Kompressionskälteanlage zugeführt. Dort wird das Inertgasgemisch gekühlt und entfeuchtet und anschließend über die Leitungen 27 bis 29 wieder dem Inertgasbehandlungsraum 1 zugeführt. Der Einsatz einer Wärmepumpe zur Kühlung des Wasserdampfes und Nutzung der Wärmeenergie ist möglich

Die Backwaren werden am oberen Ende des Spiralturmes 7 in den Spiralturm 8 überführt und in diesem abwärts zum Ausgang 9 transportiert. Dabei setzt sich der Kondensations- und Adsorptionsvorgang in den Backwaren fort.

Die Verweildauer im Inertgasbehandlungsraum 1 wird so gewählt, daß die Backwaren nach deren einmaligem Durchlaufen am Ausgang 9 hinreichend genug gekühlt sind und der Wasserdampf in den Poren kondensiert und abgeführt wurde. Die Backwaren werden anschließend mittels der Transportbänder 10, 11 in der Inertgasatmosphäre der Verpackungsmaschine 12 zugeführt und dort gasdicht verpackt, so daß das Inertgas nicht aus den Backwaren austreten kann.

## Patentansprüche

1. Verfahren zum Haltbarmachen von kapillarporösen Produkten, bei denen in den Kapillaren vorhandenes Wasser in Dampfform vorliegt, insbesondere von Backwaren unter Abkühlung in einer Inertgasatmosphäre, **dadurch gekennzeichnet, daß** die Inertgasbehandlung unmittelbar an die Wärmebehandlung anschließt, der durch Abkühlung der kapillarporösen Produkte, insbesondere Backwaren in den Produkten kondensierende Wasserdampf im durch den entstehenden Unterdruck eingesaugten Inertgas aufgenommen wird und durch das im Kreislauf geführte Inertgas, das kontinuierlich entfeuchtet wird, und dem fortlaufend zusätzlich Inertgas zugeführt wird, ausgeschleust wird und die Produkte nach der Abkühlung auf eine vorbestimmte Temperatur, bei der die Feuchtigkeit aus den Produkten hinreichend entfernt ist und die Poren und Kapillaren mit Inertgas gefüllt sind, in der Inertgasatmosphäre gasdicht verpackt werden.

2. Verfahren nach Anspruch 1, **dadurch gekennzeichnet, daß** Backwaren unmittelbar nach Beendigung des Backvorganges einer Inertgasatmosphäre ausgesetzt werden.

3. Verfahren nach Anspruch 1 oder 2, **dadurch gekennzeichnet, daß** Backwaren auf eine Kerntemperatur unter 50° C abgekühlt werden.

4. Verfahren nach mindestens einem der vorhergehenden Ansprüche, **dadurch gekennzeichnet, daß** sich der Inertgasaustausch und gleichzeitig die an sich bekannte Abkühlung über einen Zeitraum von 5 bis 180 Minuten erstreckt.

5. Verfahren nach mindestens einem der vorhergehenden Ansprüche, **dadurch gekennzeichnet, daß** sich der Inertgasaustausch über einen Zeitraum von 15 bis 20 Minuten erstreckt.

6. Verfahren nach mindestens einem der vorhergehenden Ansprüche, **dadurch gekennzeichnet, daß** die Inertgasatmosphäre gegenüber der Umgebung einen leichten Überdruck aufweist.

7. Verfahren nach Anspruch 6, **dadurch gekennzeichnet, daß** ein Überdruck von mindestens 1,0 bis 1,5.10⁻³ Pa angewendet wird.

8. Verfahren nach mindestens einem der vorhergehenden Ansprüche, **dadurch gekennzeichnet, daß** das für die Verpakkung vorgesehene Inertgas gleichzeitig für die Behandlung der Produkte verwendet wird.

9. Verfahren nach mindestens einem der vorhergehenden Ansprüche, **dadurch gekennzeichnet, daß** als Inertgas Kohlendioxid, Stickstoff, ein Gemisch aus Kohlendioxid und Stickstoff oder Sterilgas.verwendet wird.

10. Verfahren nach mindesntes einem der vorhergehenden Ansprüche, **dadurch gekennzeichnet, daß** das Inertgas und die zu behandelnden Produkte mindestens teilweise im Gegenstrom geführt werden.

11. Verfahren nach mindestens einem der vorhergehenden Ansprüche, **dadurch gekennzeichnet, daß** das Inertgas nach dem Passieren der zu behandelnden Produkte gekühlt und hinreichend entfeuchtet wird und im gekühlten Zustand mit gewünschter Temperatur und Feuchte und mit trockenem Inertgas gemischt erneut über die zu behandelnden Produkte geleitet wird.

12. Vorrichtung zum Haltbarmachen von kapillarporösen Produkten, bei den in dem Kapillaren vorhandenes Wasser in Dampfform vorliegt, insbesondere von Backwaren, unter Verwendung mindestens einer Inertgasquelle, und insbesondere zur Durchführung des Verfahrens nach mindestens einem der Ansprüche 1 bis 11, **dadurch gekennzeichnet, daß** dem Raum (1) zur Behandlung von kapillarporösen Produkten mittels Inertgas mindestens eine Vorrichtung zur Wärmebehandlung (2) und mindestens eine Vorrichtung zum wärmeerhaltenden Transport der Produkte in den Inertgasbehandlungsraum (1) zugeordnet sind, daß innerhalb des Inertgasbehandlungsraumes (1) Transportmittel (7, 8) vorgesehen sind, daß am Ausgang (9) des Inertgasbehandlungraumes (1) mindestens eine Verpackungsvorrichtung (12) und zwischen den letztgenannten mindestens eine Transportvorrichtung (10, 11) vorgesehen ist, die in einem gasdichten Gehäuse (13) geführt ist, und daß dem Inertgasbehandlungsraum (1) eine Vorrichtung (20) zur Kühlung und Entfeuchtung des im Kreislauf geführten Inertgases sowie dem gasdichten Gehäuse (13) eine Leitung (14) für die zusätzliche Zuführung von Inertgas zugeordnet sind.

13. Vorrichtung nach Anspruch 12, **dadurch gekennzeichnet, daß** das Gehäuse (13) für die Transportvorrichtung (10, 11) zwischen dem Inertgasbehandlungsraum (1) und der Verpackungsvorrichtung (12) einen Einlaß (14) für Inertgas aufweist und daß das Gehäuse (13) mit dem Inertgasbehandlungsraum (1) und der Verpackungsvorrichtung (12) gasdicht verbunden ist.

14. Vorrichtung nach Anspruch 12, **dadurch gekennzeichnet, daß** am Eingang (5) des Inertgasbehandlungsraumes (1) eine Inertgasschleuse (6), die einen Zutritt der Umgebungsatmosphäre verhindert, für die Überführung der zu behandelnden Produkte von der Vorrichtung (2) zur Wärmebehandlung in den Inertgasbehandlungsraum (1) vorgesehen ist.

15. Vorrichtung nach Anspruch 12, **dadurch gekennzeichnet, daß** oberhalb des Eingangsbereiches für die zu behandelnden Produkte im Inertgasbehandlungsraum eine Absaugöffnung (22) vorgesehen ist, an der ein Verdichter (21) und eine Kälteanlage und/oder Kühlung (20) angeschlossen sind und daß der Ausgang der Kälteanlage (20) mit der Inertgasschleuse (6) oberhalb des Ausgangsbereiches für die zu behandelnden Produkte des Inertgasbehandlungsraumes (1) mit diesem verbunden ist.

16. Vorrichtung nach mindestens einem der Ansprüche 12 bis 15, **dadurch gekennzeichnet, daß** der Ausgang der Kälteanlage (20) über mehrere übereinander liegende Leitungen (27, 28, 29) unter Einbeziehung von Ventilen (24, 25, 26) mit unterschiedlichen Höhenbereichen des Inertgasbehandlungsraumes (1) verbunden ist.

17. Vorrichtung nach mindestens einem der Ansprüche 12 bis 16, **dadurch gekennzeichnet, daß** im Inertgasbehandlungsraum (1) zwei Spiraltürme (7, 8) für den Transport der zu behandelnden Produkte vorgesehen sind, wobei ein Spiralturm (7) im Eingangsbereich für den Aufwärtstransport der Produkte und ein Spiralturm (8) im Ausgangsbereich für den Abwärtstransport der Produkte angeordnet ist.

18. Vorrichtung nach mindestens einem der Ansprüche 12 bis 17, **dadurch gekennzeichnet, daß** als Vorrichtung zur Wärmebehandlung (2) ein Backofen vorgesehen ist.

19. Vorrichtung nach mindestens einem der Ansprüche 12 bis 18, **dadurch gekennzeichnet, daß** als Transportvorrichtungen zwischen der Vorrichtung (2) zur Wärmebehandlung und dem Inertgasbehandlungsraum (1) sowie zwischen diesem und der Verpackungsvorrichtung (12) Tansportbänder (3, 4, 10, 11) vorgesehen sind.

## Claims

1. Process for preserving capillary-pore products, in which water present in the capillaries is present in vapour form, in particular bakery products, with cooling in an inert gas atmosphere, **characterized in that** the inert gas treatment immediately follows the heat treatment, the water vapour condensing in the products by cooling the capillary-pore products, in particular bakery products, is taken up in the inert gas drawn in by the resultant reduced pressure and is discharged by the circulated inert gas which is continuously dehumidified and to which additional inert gas is continuously fed and, after cooling the products to a predetermined temperature at which the moisture is sufficiently removed from the products and the pores and capillaries are filled with inert gas, the products are packaged gas-tightly in the inert gas atmosphere.

2. Process according to Claim 1, **characterized in that** bakery products are exposed to an inert gas atmosphere immediately after the baking operation is complete.

3. Process according to Claim 1 or 2, **characterized in that** bakery products are cooled to a core temperature below 50°C.

4. Process according to at least one of the preceding claims, **characterized in that** the inert gas exchange, and simultaneously the cooling which is known per se, extend over a period of 5 to 180 minutes.

5. Process according to at least one of the preceding claims, **characterized in that** the inert gas exchange extends over a period of 15 to 20 minutes.

6. Process according to at least one of the preceding claims, **characterized in that** the inert gas atmosphere is at a slight overpressure compared with the environment.

7. Process according to claim 6, **characterized in that** an overpressure of at least 1.0 to 1.5·10⁻³ Pa is employed.

8. Process according to at least one of the preceding claims, **characterized in that** the inert gas intended for packaging is simultaneously used for treating the products.

9. Process according to at least one of the preceding claims, **characterized in that** the inert gas used is carbon dioxide, nitrogen, a mixture of carbon dioxide and nitrogen, or sterile gas.

10. Process according to at least one of the preceding claims, **characterized in that** the inert gas and the products to be treated are conducted at least in part in countercurrent.

11. Process according to at least one of the preceding claims, **characterized in that** the inert gas, after passing through the products to be treated, is cooled and sufficiently dehumidified and, in the cooled state at a desired temperature and moisture and mixed with dry inert gas, is again passed over the products to be treated.

12. Apparatus for preserving capillary-pore products in which water present in the capillaries is present in vapour form, in particular bakery products, using at least one inert gas source, and in particular for carrying out the process according to at least one of Claims 1 to 11, **characterized in that** at least one apparatus for heat treatment (2) and at least one apparatus for heat-retaining transport of the products into the inert gas treatment chamber (1) are assigned to the chamber (1) for treating capillary-pore products by inert gas, **in that** within the inert gas treatment chamber (1) transport means (7, 8) are provided, **in that** at the outlet (9) of the inert gas treatment chamber (1) at least one packaging apparatus (12) is provided, and between the latter at least one transport apparatus (10, 11) is provided which is conducted in a gas-tight housing (13), and **in that** an apparatus (20) for cooling and dehumidifying the circulated inert gas is assigned to the inert gas treatment chamber (1), and a line (14) for the additional feed of inert gas is assigned to the gas-tight housing (13).

13. Apparatus according to Claim 12, **characterized in that** the housing (13) for the transport apparatus (10, 11) between the inert gas treatment chamber (1) and the packaging apparatus (12) has an inlet (14) for inert gas, and **in that** the housing (13) is connected gas-tightly to the inert gas treatment chamber (1) and the packaging apparatus (12).

14. Apparatus according to Claim 12, **characterized in that**, at the entrance (5) of the inert gas treatment chamber (1), an inert gas lock (6) which prevents ingress of the ambient atmosphere is provided for transferring the products to be treated from the apparatus (2) to the heat treatment in the inert gas treatment chamber (1).

15. Apparatus according to Claim 12, **characterized in that**, above the entrance region for the products to be treated in the inert gas treatment chamber an extraction orifice (22) is provided, to which are connected a compressor (21) and a refrigeration plant and/or cooling (20), and **in that** the outlet of the refrigeration plant (20) having the inert gas lock (6), above the outlet region for the products to be treated of the inert gas treatment chamber (1), is connected to the latter.

16. Apparatus according to at least one of Claims 12 to 15, **characterized in that** the outlet of the refrigeration plant (20) is connected via a plurality of lines (27, 28, 29) lying one above the other, incorporating valves (24, 25, 26), to different height regions of the inert gas treatment chamber (1).

17. Apparatus according to at least one of Claims 12 to 16, **characterized in that**, in the inert gas treatment chamber (1), two spiral towers (7, 8) for transporting the products to be treated are provided, one spiral tower (7) being disposed in the entrance region for the upward transport of the products, and one spiral tower (8) being disposed in the outlet region for the downward transport of the products.

18. Apparatus according to at least one of Claims 12 to 17, **characterized in that** a baking oven is provided as apparatus for heat treatment (2).

19. Apparatus according to at least one of Claims 12 to 18, **characterized in that** conveyor belts (3, 4, 10, 11) are provided as transport apparatuses between the apparatus (2) for heat treatment and the inert gas treatment chamber (1), and also between this and the packaging apparatus (12).

## Revendications

1. Procédé de conservation de produits capillaires poreux, où l'eau présente dans les capillaires se trouve à l'état de vapeur, en particulier des pâtisseries, par refroidissement dans une atmosphère de gaz inerte, **caractérisé en ce que** le traitement sous gaz inerte suit immédiatement le traitement thermique, où par refroidissement des produits poreux capillaires, en particulier des pâtisseries, la vapeur d'eau condensée dans les produits est fixée dans le gaz inerte aspiré par la dépression qui se forme et est exclue par le gaz inerte amené dans le cycle, qui est continuellement déshumidifié et le gaz inerte supplémentaire continuellement amené, et les produits sont emballées de manière étanche aux gaz, dans l'atmosphère de gaz inerte, après le refroidissement jusqu'à une certaine température, à laquelle l'humidité est suffisamment éliminée des produits et les pores et capillaires sont remplis du gaz inerte.

2. Procédé selon la revendication 1, **caractérisé en ce que** les pâtisseries sont exposées à une atmosphère de gaz inerte immédiatement après la fin du processus de cuisson.

3. Procédé selon la revendication 1 ou 2, **caractérisé en ce que** les pâtisseries sont refroidies à une température du centre inférieure à 50°C.

4. Procédé selon au moins l'une quelconque des revendications précédentes, **caractérisé en ce que** l'échange de gaz inerte et simultanément, le refroidissement connu en soi s'étendent sur une période allant de 5 à 180 minutes.

5. Procédé selon au moins l'une quelconque des revendications précédentes, **caractérisé en ce que** l'échange de gaz inerte s'étend sur une période allant de 15 à 20 minutes.

6. Procédé selon au moins l'une quelconque des revendications précédentes, **caractérisé en ce que** l'atmosphère de gaz inerte présente une légère surpression par rapport à l'environnement.

7. Procédé selon la revendication 6, **caractérisé en ce que** l'on utilise une surpression d'au moins 1,0 à 1,5.10⁻³ Pa.

8. Procédé selon au moins l'une quelconque des revendications précédentes, **caractérisé en ce que** le gaz inerte prévu pour l'emballage est utilisé simultanément pour le traitement du produit.

9. Procédé selon au moins l'une quelconque des revendications précédentes, **caractérisé en ce que** l'on utilise comme gaz inerte, le dioxyde de carbone, l'azote, un mélange de dioxyde de carbone et d'azote ou un gaz stérile.

10. Procédé selon au moins l'une quelconque des revendications précédentes, **caractérisé en ce que** le gaz inerte et le produit à traiter sont amenés au moins partiellement à contre-courant.

11. Procédé selon au moins l'une quelconque des revendications précédentes, **caractérisé en ce que** le gaz inerte est refroidit et suffisamment déshumidifié après le passage du produit à traiter et à l'état refroidi à une température et humidité souhaitées, est mélangé à du gaz inerte sec et à nouveau conduit sur les produits à traiter.

12. Dispositif pour la conservation de produits capillaires poreux, où l'eau présente dans les capillaires se trouve à l'état de vapeur, en particulier des pâtisseries, en utilisant au moins une source de gaz inerte et en particulier pour réaliser le procédé selon au moins l'une quelconque des revendications 1 à 11, **caractérisé en ce que** l'espace (1) pour le traitement de produits capillaires poreux à l'aide d'un gaz inerte, au moins un dispositif pour le traitement thermique (2) et au moins un dispositif pour le transport à chaud du produit dans l'espace de traitement avec le gaz inerte (1) sont disposés, que au sein de l'espace de traitement avec le gaz inerte (1), des moyens de transport (7, 8) sont prévus, que à la sortie (9) de l'espace de traitement avec le gaz inerte (1), est prévu au moins un dispositif d'emballage (12) et entre ces derniers, au moins un dispositif de transport (10, 11), qui est effectué dans un boîtier étanche aux gaz (13) et **en ce que** dans l'espace de traitement avec le gaz inerte (1), est disposé un dispositif (20) pour refroidir et déshumidifier le gaz inerte amené dans le cycle, ainsi que dans le boîtier étanche aux gaz (13), une conduite (14) pour l'apport supplémentaire de gaz inerte.

13. Dispositif selon la revendication 12, **caractérisé en ce que** le boîtier (13) pour le dispositif de transport (10, 11) présente entre l'espace de traitement avec le gaz inerte (1) et le dispositif d'emballage (12), une admission (14) pour le gaz inerte et **en ce que** le boîtier (13) est relié de manière étanche aux gaz, à l'espace de traitement avec le gaz inerte (1) et au dispositif d'emballage (12).

14. Dispositif selon la revendication 12, **caractérisé en ce que** à l'entrée (5) de l'espace de traitement avec le gaz inerte (1), un sas pour le gaz inerte (6), qui empêche l'entrée de l'atmosphère ambiant, est prévu pour le transfert du produit à traiter depuis le dispositif (2) pour le traitement thermique dans l'espace de traitement avec le gaz inerte (1).

15. Dispositif selon la revendication 12, **caractérisé en ce que** au-dessus de la zone d'entrée des produits à traiter dans l'espace de traitement avec le gaz inerte, est prévu un orifice d'aspiration (22), sur lequel sont raccordé un compresseur (21) et une installation frigorifique et/ou de refroidissement (20) et **en ce que** la sortie de l'installation frigorifique (20) avec le sas de gaz inerte (6) au-dessus de la zone de sortie des produits à traiter de l'espace de traitement avec le gaz inerte (1), est reliée à celui-ci.

16. Dispositif selon au moins l'une quelconque des revendications 12 à 15, **caractérisé en ce que** la sortie de l'installation frigorifique (20) est reliée par plusieurs conduites superposées (27, 28, 29) avec intégration de vannes (24, 25, 26) à différentes hauteurs de l'espace de traitement avec le gaz inerte (1).

17. Dispositif selon au moins l'une quelconque des revendications 12 à 16, **caractérisé en ce que** dans l'espace de traitement avec le gaz inerte (1), sont prévues deux tours hélicoïdales (7, 8) pour le transport des produits à traiter, où une tour hélicoïdale (7) est disposée dans la zone d'entrée pour le transport ascendant du produit et une tour hélicoïdale (8) dans la zone de sortie pour le transport descendant des produits.

18. Dispositif selon au moins l'une quelconque des revendications 12 à 17, **caractérisé en ce que** l'on prévoit un four comme dispositif pour le traitement thermique (2).

19. Dispositif selon au moins l'une quelconque des revendications 12 à 18, **caractérisé en ce que** comme dispositif de transport entre le dispositif (2) pour le traitement thermique et l'espace de traitement avec le gaz inerte (1), ainsi que entre celui-ci et le dispositif d'emballage (12), sont prévues des bandes transporteuses (3, 4, 10, 11).
